# EUROPÄISCHE PATENTANMELDUNG

(11) **EP 0 575 873 A1**
(43) Veröffentlichungstag der Anmeldung: **29.12.1993**
(21) Anmeldenummer: 93109567.3
(22) Anmeldetag: 16.06.1993
(51) Int. Cl.: C08F 10/00, C08F 2/00

(54) **Verfahren zur Herstellung von Copolymerisaten des Ethylens mit Acrylsäureestern oder Acrylsäure**

(30) Priorität: 19.06.1992 DE 4219983
(71) Anmelder: BASF Aktiengesellschaft, D-67063 Ludwigshafen (DE)
(72) Erfinder: Pfleger, Klaus, Dr., D-5047 Wesseling (DE); Schiller, Siegfried, D-5040 Bruehl (DE); Arnold, Gerhard, D-5047 Wesseling (DE)

(57) **Zusammenfassung**

Verfahren zur Herstellung von Copolymerisaten des Ethylens mit Acrylsäureestern oder Acrylsäure durch Copolymerisation von 100 Gewichtsteilen Ethylen mit 1,0 bis 20,0 Gewichtsteilen tertiär-Butylacrylat oder tertiär-Butylmethacrylat oder Acrylsäure oder Lösungen von Acrylsäure in Acrylsäureestern in einem kontinuierlich betriebenen, rohrförmigen Polymerisationssystem bei Drücken oberhalb von 800 bar und Temperaturen von 130 bis 320°C in Gegenwart von radikalisch zerfallenden Polymerisationsinitiatoren durch Zufuhr von zwei Gasströmen in das Polymerisationssystem, wobei der erste Gasstrom ausschließlich Ethylen mit Polymerisationsinitiator und gegebenenfalls Polymerisationsregler und der zweite Gasstrom eine Mischung aus Ethylen und tertiär-Butylacrylat oder tertiär-Butylmethacrylat oder eine Mischung von Ethylen mit einer Lösung von Acrylsäure in Acrylsäureestern und Polymerisationsinitiatoren sowie gegebenenfalls Polymerisationsregler enthält.

## Beschreibung

Die Erfindung betrifft ein Verfahren zur Herstellung von Copolymerisaten des Ethylens mit Acrylsäureestern oder Acrylsäure durch Copolymerisation von 100 Gewichtsteilen Ethylen mit 1,0 bis 20,0 Gewichtsteilen tertiär-Butylacrylat oder tertiär-Butylmethacrylat oder Acrylsäure oder Lösungen von Acrylsäure in Acrylsäureestern in einem kontinuierlich betriebenen, rohrförmigen Polymerisationssystem bei Drücken oberhalb von 800 bar und Temperaturen von 130 bis 320°C in Gegenwart von radikalisch zerfallenden Polymerisationsinitiatoren durch Zufuhr von zwei Gasströmen in das Polymerisationssystem.

Die nach dem erfindungsgemäßen Verfahren erhaltenen Copolymerisate werden vor allem als Schmelzkleber verwendet, beispielsweise für Metalle, Keramik, Papier, Textilien, Kunststoffe, Holz, Glas, etc.; aufgrund ihrer Eigenschaften werden sie beispielsweise zur Beschichtung von Metallrohren oder -folien eingesetzt, so beispielsweise bei der Fertigung von Kunststoff-beschichteten Pipeline-Rohren oder sehr dünnen Metallschichten, beispielsweise von Aluminium-Folien, die nach der Beschichtung als Folienbändchen zur Isolierung von Elektrokabeln Einsatz finden.

Des weiteren dienen die erhaltenen Copolymerisate als Haftvermittler bei der Herstellung von Verbundwerkstoffen. Ferner ist das direkte Verkleben von Metallen mit Metallen mit Hilfe dieser Copolymerisate möglich, beispielsweise das Herstellen von Sandwichplatten mit einem Polyethylenkern.

Bei allen Einsatzgebieten ist eine hohe Haftfestigkeit der Produkte erforderlich.

Angaben über Ethylen-Hochdruckpolymerisationsverfahren, bei denen Rohrreaktoren benutzt werden, finden sich beispielsweise in "Ullmanns Encyklopädie der technischen Chemie", 4. Auflage, Band 19, Seiten 167 bis 178.

Unter Ethylen-Acrylsäure-Copolymerisaten bzw. Ethylen-Acrylsäureester-Copolymerisaten werden die Copolymerisate des Ethylens verstanden, die bei den genannten Temperatur- und Druckverhältnissen, bevorzugt bei einem Druck von 1.500 bis 3.000 bar und einer Temperatur von 120 bis 320°C, herstellbar sind.

Die erhaltenen Copolymerisate haben einen Gehalt an einpolymerisierten Comonomeren von 0,5 bis 25 Gew.-%, vorzugsweise 2,0 bis 20,0 Gew.-%. Der Schmelzindex der Produkte liegt bei 0,1 bis 30 g/10 min, bestimmt nach ASTM-D 1238-65T bei einer Temperatur von 190°C und einem Auflagegewicht von 2,16 kg. Die Dichte der Copolymerisate liegt im Bereich von 0,9240 bis 0,9360 g/cm³, gemessen nach DIN 53479.

Es ist bereits bekannt, bei der Hochdruckpolymerisation von Ethylen den Ethylenstrom in mehrere Teilströme aufzuteilen. Die in den GB-Patentschriften 1 010 847, 915 210, 1 347 361 und in der US-Patentschrift 3 725 378 beschriebenen Verfahren zielen darauf ab, den Umsatz des Ethylens zu Polyethylen pro Durchsatz zu erhöhen. Die Herstellung von Copolymerisaten des Ethylens mit Acrylsäure oder Acrylsäureestern ist ebenfalls bekannt und in der Patentliteratur beschrieben. So wird beispielsweise in der französischen Patentschrift 1 596 991 bei der Herstellung von Copolymeren des Ethylens mit Acrylsäureester die Temperatur im Reaktor so hoch gewählt, daß die sekundären und tertiären Estergruppen im Polymerisat teilweise oder vollständig pyrolysiert werden, wobei unter Abspaltung eines Alkens freie Carbonsäuregruppen im Copolymeren erhalten werden.

Die bekannten Verfahren haben alle den Nachteil, daß Produkte erhalten werden, deren mechanische Festigkeiten und vor allem die Haftfestigkeit den Ansprüchen der Praxis nicht genügen. Unter den Reaktionsbedingungen der bekannten Verfahren werden zu einem gewissen Anteil niedermolekulare Produkte, vor allem niedermolekulare Poly-Acrylate gebildet, die negative Auswirkungen auf die mechanischen Eigenschaften der Copolymere haben.

In der DE-Patentschrift 36 15 562 wird ein Verfahren aufgezeigt, bei dem ein Gemisch von Ethylen und Acrylsäureestern im Hauptstrom und in mehreren Nebenströmen dem Reaktor zugeführt und zur Reaktion gebracht wird. Bei diesem Verfahren wird zwar die Bildung von niedermolekularen Produkten stark reduziert, aber nicht völlig verhindert. Die Haftfestigkeitswerte der nach diesem Verfahren gewonnenen Produkte bedürfen ebenfalls einer Verbesserung.

Der vorliegenden Erfindung lag daher die Aufgabe zugrunde, ein Verfahren zur Herstellung von Copolymeren des Ethylens mit tertiär-Butylacrylat bzw. tertiär-Butylmethacrylat oder Acrylsäure bzw. Lösungen von Acrylsäure in Acrylsäureestern in einem rohrförmigen Polymerisationssystem aufzufinden, bei dem unter Beibehaltung der guten allgemeinen Polymerisateigenschaften und des guten Umsatzes vor allem die mechanischen Festigkeiten wie Haftfestigkeit der Copolymere verbessert werden.

Die Aufgabe wird erfindungsgemäß dadurch gelöst, daß der erste Gasstrom ausschließlich Ethylen mit Polymerisationsinitiator und gegebenenfalls Polymerisationsregler und der zweite Gasstrom eine Mischung aus Ethylen und tertiär-Butylacrylat oder tertiär-Butylmethacrylat oder eine Mischung von Ethylen mit einer Lösung von Acrylsäure in Acrylsäureestern und Polymerisationsinitiatoren sowie gegebenenfalls Polymerisationsregler enthält.

Ein bevorzugtes Mengenverhältnis der beiden Gasströme beträgt 3 zu 7 bis 6 zu 4, vorzugsweise 1 zu 1.

Die Mischtemperatur nach dem Zusammentreffen der beiden Gasströme sollte oberhalb von 195°C, bevorzugt zwischen 210 und 230°C gehalten werden.

Das Verfahren läßt sich unter Anwendung der üblichen kontinuierlich betriebenen, rohrförmigen Polymerisationssysteme (Rohrrekatoren) ausführen. Unter Rohrreaktoren versteht man rohrförmige Polymerisationssysteme, deren Verhältnis Länge zum Durchmesser der druckfesten Rohre im Bereich von 10.000 bis 60.000 zu 1 liegt.

Beim erfindungsgemäßen Verfahren werden sogenannnte Zweizonen-Reaktoren benutzt; darunter versteht man ein rohrförmiges Polymerisationssystem, dem zwei Gasströme derart zugeführt werden, daß über den ersten Gasstrom das Reaktionsgemisch zur ersten Reaktionszone geleitet und der zweite Gasstrom etwa in der Mitte des Reaktors mit dem die erste Reaktionszone verlassenden Gemisch vereinigt wird; das nach der Mischung resultierende Reaktionsgemisch wird anschließend in die zweite Reaktionszone geführt und dort zur Reaktion gebracht.

Außer Acrylsäure werden auch Lösungen von Acrylsäure in Acrylsäureestern bei der Copolymerisation des Ethylens eingesetzt. Die Acrylsäure-Lösungen enthalten bevorzugt bis zu 50 Gew.-%, insbesondere bis zu 30 Gew.-% Acrylsäure. Bei den eingesetzten Acrylsäureestern handelt es sich um Ester der Acryl- bzw. Methacrylsäure mit C₁-bis C₈-, vorzugsweise C₁- bis C₆-Alkanolen; insbesondere bevorzugt ist eine Lösung von Acrylsäure in Methylacrylat oder normal-Butylacrylat.

Werden Acrylsäureester allein bei der Copolymerisation des Ethylens eingesetzt, dann kommen vorzugsweise tertiär-Butylacrylat bzw. tertiär-Butylmethacrylat in Betracht.

Das Ethylen wird mit Acrylsäure oder mit Lösungen von Acrylsäure in Acrylsäureestern oder mit tertiär-Butylacrylat bzw. tertiär-Butylmethacrylat in Gegenwart von radikalisch zerfallenden Polymerisationsinitiatoren copolymerisiert. Unter radikalischen Polymerisationsinitiatoren sollen die Katalysatoren verstanden werden, die auch bei der Homopolymerisation des Ethylens unter hohem Druck verwendet werden. Geeignet ist beispielsweise Sauerstoff, zweckmäßigerweise in Mengen von 2 bis 100 mol-ppm, bezogen auf das zu polymerisierende Ethylen. In Betracht kommen auch Peroxide, Hydroperoxide und andere Radikalbildner sowie Gemische von Peroxiden und Mischungen aus Sauerstoff und Peroxiden. Als Beispiele für Peroxide und Hydroperoxide seien genannt: tertiär-Butylperoxypivalat, Di-tertiär-Butylperoxid, tertiär-Butylhydroperoxid, tertiär-Butylperbenzoat, p-Menthanhydroperoxid und Di-lauroylperoxid. Unter radikalischen Polymerisationsinitiatoren sollen auch Verbindungen wie Azo-isobuttersäuredinitril verstanden werden. Man kann auch Mischungen aus Sauerstoff und einem oder mehreren Peroxiden verwenden.

Bevorzugt wird die Copolymerisation des Ethylens mit Acrylsäure oder Lösungen der Acrylsäure in Acrylsäureestern oder tertiär-Butylacrylat bzw. tertiär-Butylmethacrylat durch Sauerstoff oder tertiär-Butylperoxypivalat initiiert.

Üblicherweise arbeitet man in Gegenwart von Polymerisationsreglern. Mit Hilfe der Polymerisationsregler ist es möglich, den Schmelzindex der entstehenden Copolymerisate einzustellen. Als Regler dienen Wasserstoff, Ketone, Aldehyde, Alkohole, Ether und normale und verzweigte Kohlenwasserstoffe. Vorzugsweise arbeitet man mit Propylen, Propan oder Propionaldehyd. Die Polymerisationsregler werden im allgemeinen in Mengen von 0,2 bis 5 mol-%, bezogen auf das zu polymerisierende Ethylen, eingesetzt.

In einer besonderen Ausführung des erfindungsgemäßen Verfahrens, beim Einsatz von tertiär-Butylacrylat oder tertiär-Butylmethacrylat kommt es bekanntlich während der Reaktion zur Abspaltung von iso-Buten; in diesen Fällen kann auf zusätzliche Regler verzichtet werden, da das entstehende iso-Buten Reglereigenschaften besitzt. Die Copolymerisation wird im allgemeinen in Abwesenheit eines Lösungsmittels durchgeführt. Die geringen Mengen an inertem Lösungsmittel, in denen die Peroxide gelöst werden, können gegenüber den anderen Einsatzstoffen vernachlässigt werden.

Wird mit Sauerstoff als Polymerisationsinitiator gearbeitet, dann kann jegliches Lösungsmittel entfallen.

In dem erfindungsgemäßen Verfahren wird nun so verfahren, daß in der ersten Reaktionszone des Zweizonen-Reaktors, die über den ersten Gasstrom, der ausschließlich Ethylen und Initiator sowie gegebenenfalls Regler enthält, beschickt wird, die Polymerisation des Ethylens zu einem Homopolymerisat durchgeführt wird; das die erste Reaktionszone verlassende Reaktionsgemisch wird sodann mit dem zweiten Gasstrom gemischt, der außer Ethylen noch Acrylsäure oder eine Lösung von Acrylsäure in Acrylsäureestern oder tertiär-Butylcrylat bzw. tertiär-Butylmethacrylat enthält. Die entstandene Mischung wird in die zweite Reaktionszone geführt und dort zur Copolymerisation gebracht.

Von entscheidender Bedeutung ist dabei, daß das Reaktionsgemisch beim Eintritt in die Zweite Reaktionszone eine Temperatur von mindestens 195°C, vorzugsweise 210 bis 230°C haben muß. Dies bedeutet, daß die eigentliche Copolymerisation erst bei höheren Temperaturen durchgeführt wird.

Überraschenderweise zeigte sich, daß unter diesen Reaktionsbedingungen ein Copolymerisat mit äußerst geringem Anteil an niedermolekularen Polyacrylat-Molekeln entsteht. Bei den höheren Temperaturen, die das Reaktionsgemisch in der zweiten Reaktionszone durchläuft, ist die Aktivierung des Ethylens schon in einem Maße erfolgt, daß das Ethylen ebenso wie die aufgrund ihrer chemischen Konstitution reaktionsfähigeren Comonomeren an der einsetzenden Copolymerisation sofort teilnehmen kann.

Das nach dem erfindungsgemäßen Verfahren erhaltene Copolymerisat weist in seinem molekularen Aufbau keine statistische Verteilung der einpolymerisierten Acrylsäure- bzw. Acrylat-Bausteine auf; es handelt sich vielmehr um ein Mischpolymerisat, das größere Sequenzen rein-ethylenischer Struktur gefolgt von Blöcken des einpolymerisierten Comonomeren im höhermolekularen Bereich aufweist.

Überraschenderweise hat ein Copolymerisat der aufgezeigten Struktur bezüglich der Haftfestigkeit große Vorteile gegenüber den Copolymerisaten, die nach bekannten Verfahren erhalten werden.

Die in den nachfolgenden Beispielen angegebenen Haftwerte wurden an Verbund-Probekörpern ermittelt, wobei die Eigenschaft der Copolymerisate als Haftvermittler in einem Verbund Aluminium-Copolymerisat-Aluminium geprüft wurde. Der Haftwert wird als die Kraft ermittelt, die notwendig ist, einen 15 mm breiten Verbundstreifen zu trennen.

Die Probekörper werden wie folgt hergestellt:
Zwei Aluminium-Folien werden auf der hochglänzenden Seite mit Aceton abgewaschen, getrocknet und so auf einer Unterlage angeordnet, daß die Oberflächenstruktur beider Alu-Folien parallel verläuft. Es werden sodann 4 g des Copolymerisates mittig auf die rechte Folie gegeben; dabei ist zu beachten, daß keine Granulatkörner übereinander liegen und die Abstände zwischen den Granulatkörnern möglichst klein sind. Auf die rechte Alu-Folie wird bündig zum Rand ein Papierstreifen (40 x 210 mm) einer Dicke von 0,2 mm gelegt. Die linke wird über die rechte Alu-Folie geklappt, wobei die Hochglanzseite nach unten gerichtet und die Oberflächenstruktur parallel zur unteren Folie angeordnet ist. Das entstandene Paket wird zwischen die Preßbleche gelegt und komplett in die auf 180°C vorgeheizte Presse eingebracht. Der Preßvorgang wird über drei Minuten bei einem Druck von 80 bar vollzogen. Nach der Abkühlung wird das Paket aus der Presse entnommen. Mit einer Schlagschere werden kerbenfreie Streifen einer Breite von 15 ± 0,5 mm parallel zur Strukturierung der Aluminium-Oberfläche geschnitten.

Die Bestimmung des Haftwertes erfolgt mit Hilfe einer Zug-Prüfmaschine nach DIN 51221 mit elektronischer Messung von Kraft- und Längenänderungen, mit elektromechanischem Antrieb (Firma Zwick GmbH & Co, D-7900 Ulm, Baureihe 1400).

Die Verbund-Prüfstreifen werden im nicht-verklebten Bereich gegeneinander geöffnet und in die Zug-Prüfmaschine eingespannt. Zur Bestimmung des Haftwertes werden die Prüfstreifen mit einer Geschwindigkeit von 100 mm/min getrennt. Die dabei auftretenden Zugkräfte werden in einem Kraft/Zeit-Diagramm registriert. Der Mittelwert aus 10 repräsentativen Einzelmessungen wird als Haftwert in N/15 mm angegeben.

### Beispiel

Bei einem Zweizonen-Reaktor wurde mit dem Gasstrom A ein Gemisch von 1.000 Gewichtsteilen Ethylen mit 3,6 Gewichtsteilen Propylen als Polymerisationsregler sowie 15 mol-ppm Sauerstoff, bezogen auf Ethylen, in die erste Reaktionszone geleitet und unter einem Druck von 2200 bar polymerisiert. Die Eingangstemperatur betrug 170°C, die Maximaltemperatur in der ersten Reaktionszone erreichte Werte von 306 bis 308°C.

Mit dem Gasstrom B wurde am Mischpunkt des Reaktors das die erste Reaktionszone verlassende Reaktionsgemisch mit einer Mischung aus 1.000 Gewichtsteilen Ethylen, 75 Gewichtsteilen tertiär-Butylacrylat und 12 mol-ppm Sauerstoff, bezogen auf das Ethylen, versetzt.

Die Mischtemperatur, mit der das resultierende Gemisch aus beiden Gasströmen in die zweite Reaktionszone eingeleitet wurde, betrug 225°C.

In der zweiten Reaktionszone wurde eine Maximaltemperatur von 296°C erreicht.

Es wurden 455 kg eines Copolymerisates erhalten, das sehr gute Haftfestigkeitswerte aufwies.

Die Analysen zeigten folgende Werte:

| | |
|---|---|
| Schmelzindex | 6,8 ± 0,1 g/10 min |
| Dichte | 0,9278 g/cm³ |
| Gehalt an tertiär-Butylacrylat | 7,4 ± 0,1 Gew.-% |
| Gehalt an freier Acrylsäure | 4,15 ± 0,05 Gew.-% |
| Haftfestigkeit (Mittelwert aus 10 Einzelmessungen) | 88 N/15 mm, gemessen nach DIN 51221. |

### Vergleichsbeispiel

Dem gleichen Zweizonen-Reaktor wie in Beispiel 1 wurde im Gasstrom A eine Mischung von 1.000 Gewichtsteilen Ethylen, 27 Gewichtsteile tertiär-Butylacrylat und 3,6 Gewichtsteile Propylen sowie 12 mol-ppm Sauerstoff, bezogen auf Ethylen, zugeführt und in der ersten Reaktionszone unter einem Druck von 2.200 bar zur Reaktion gebracht, wobei eine Maximaltemperatur von 305°C erreicht wurde.

Mit dem Gasstrom B wurde am Mischpunkt des Reaktors dem die erste Reaktionszone verlassenden Reaktionsgemisch eine Mischung von 1.000 Gewichtsteilen Ethylen, 48 Gewichtsteilen tertiär-Butylacrylat und 12 mol-ppm Sauerstoff, bezogen auf das Ethylen, zugeführt.

Die Mischtemperatur, mit der das Gemisch in die zweite Reaktionszone eingeleitet wurde, betrug 180°C.

In der zweiten Reaktionszone wurde eine Maximaltemperatur von 300°C erreicht.

Es wurden 464 kg Copolymerisat erhalten, für das folgende Analysenwerte ermittelt wurden:

| | |
|---|---|
| Schmelzindex | 6,6 ± 0,1 g/10 min |
| Dichte | 0,9285 g/cm³ |
| Gehalt an tertiär-Butylacrylat | 7,2 ± 0,1 Gew.-% |
| Gehalt an freier Acrylsäure | 4,2 ± 0,1 Gew.-% |
| Haftfestigkeit (Mittelwert aus 10 Einzelmessungen) | 38,5 N/15 mm, gemessen nach DIN 51221. |

## Patentansprüche

1. Verfahren zur Herstellung von Copolymerisaten des Ethylens mit Acrylsäureestern oder Acrylsäure durch Copolymerisation von 100 Gewichtsteilen Ethylen mit 1,0 bis 20,0 Gewichtsteilen tertiär-Butylacrylat oder tertiär-Butylmethacrylat oder Acrylsäure oder Lösungen von Acrylsäure in Acrylsäureestern in einem kontinuierlich betriebenen, rohrförmigen Polymerisationssystem bei Drücken oberhalb von 800 bar und Temperaturen von 130 bis 320°C in Gegenwart von radikalisch zerfallenden Polymerisationsinitiatoren durch Zufuhr von zwei Gasströmen in das Polymerisationssystem, dadurch gekennzeichnet, daß der erste Gasstrom ausschließlich Ethylen mit Polymerisationsinitiator und gegebenenfalls Polymerisationsregler und der zweite Gasstrom eine Mischung aus Ethylen und tertiär-Butylacrylat oder tertiär-Butylmethacrylat oder eine Mischung von Ethylen mit einer Lösung von Acrylsäure in Acrylsäureestern und Polymerisationsinitiatoren sowie gegebenenfalls Polymerisationsregler enthält.

2. Verfahren nach Anspruch 1, dadurch gekennzeichnet, daß das Mengenverhältnis der beiden Gasströme im Verhältnis 3 zu 7 bis 6 zu 4, vorzugsweise bei 1 zu 1, gehalten wird.

3. Verfahren nach Anspruch 1 und 2, dadurch gekennzeichnet, daß die Mischtemperatur nach dem Zusammentreffen der beiden Gasströme oberhalb von 195°C, bevorzugt zwischen 210 und 230°C, gehalten wird.
